# EUROPEAN PATENT SPECIFICATION

(11) **EP 4 033 483 B1**
(45) Date of publication and mention of the grant of the patent: **18.10.2023**
(21) Application number: 22177991.1
(22) Date of filing: 09.06.2022
(51) Int. Cl.: G10L 15/01, B60R 16/037, G10L 21/0216

(54) **METHOD AND APPARATUS FOR TESTING VEHICLE-MOUNTED VOICE DEVICE, ELECTRONIC DEVICE AND STORAGE MEDIUM**
VERFAHREN UND VORRICHTUNG ZUR PRÜFUNG EINER IN EINEM FAHRZEUG MONTIERTEN SPRACHEINRICHTUNG, ELEKTRONISCHES GERÄT UND SPEICHERMEDIUM
MÉTHODE ET APPAREIL POUR L'ÉVALUATION D'UN DISPOSITIF VOCAL MONTÉ DANS UN VÉHICULE, DISPOSITIF ÉLECTRONIQUE ET SUPPORT D'ENREGISTREMENT

(30) Priority: 11.06.2021 CN 202110654584
(43) Date of publication of application: 27.07.2022
(73) Proprietor: Apollo Intelligent Connectivity (Beijing) Technology Co., Ltd., Beijing 100176 (CN)
(72) Inventor: ZHOU, Yi, Beijing, 100176 (CN); CHEN, Zhen, Beijing, 100176 (CN)
(74) Representative: Maiwald GmbH

(56) References cited:
- CN-A- 110 675 857
- CN-A- 110 808 029
- KR-B1- 101 605 848

## Description

### TECHNICAL FIELD

The disclosure relates to the field of computer technology, specially the field of artificial intelligence technologies such as natural language processing and voice technology, and in particular to a method for testing a vehicle-mounted voice device, an apparatus for testing a vehicle-mounted voice device, an electronic device, a storage medium and a computer program product.

### BACKGROUND

With the development of science and technology, voice recognition function has been widely used in vehicles. Vehicle-mounted voice recognition devices need to be tested before the vehicles are putting on the market. In the process of testing the vehicle-mounted voice devices, there are usually a variety of test scenarios.

Therefore, how to improve the test efficiency of the vehicle-mounted voice devices is a problem to be solved urgently.

CN 110 808 029 A provides a vehicle voice test system and a method, wherein a host computer sends a noise environment calling instruction to a noise database, the noise database returns a noise file to the host computer, and the host computer controls a noise simulation system to play the noise file; the host sends a awakening corpus calling instruction to the corpus database, controls the voice playing system to play the awakening corpus, and the vehicle machine to be tested identifies the awakening corpus through an awakening test process; the host monitors the awakening test process, if the awakening test result is successful, the host sends a corpus identification calling instruction to the corpus database and controls the voice playing system to play the corpus identification, and the vehicle machine to be tested identifies the corpus through the identification test process; the host monitors the identification test process to obtain an identification test result. The embodiment of the invention improves the vehicle-mounted machine voice testing efficiency by providing the vehicle-mounted machine voice testing system and method for automatic testing; the vehicle voice test is carried out by adopting the corpus, so that the problem of single manual test is solved.

CN 110 675 857 A provides a voice recognition automatic test system and a method, the system comprises a client, a front-end test server, a back-end test server and a cloud server, wherein the front-end test server receives a test request which comprises a device type to be tested, a test background environment and a test mode and is sent by the client, searches a corpus set corresponding to the device type to be tested from a local corpus database, searches an audio data set corresponding to the corpus set and the test background environment from the local audio database, and sends a test task generated by the corpus set, the audio data set and the test mode to the back-end test server; the back-end test server synthesizes the voice data set and the audio data set by adopting a synthesis mode corresponding to the test mode to obtain synthesized data, matches the artificial intelligent voice recognition system of the cloud server with respect to the recognition result and the expected result of the synthesized data, and obtains a test result according to the matching result.

KR 101 605 848 B1 discloses a speech recognition performance evaluation method and apparatus. The speech recognition performance evaluating apparatus sequentially outputs a voice sound source and a sound source, calculates a signal-to-noise ratio of the sound source and the sound source received by the voice recognition apparatus through the microphone, and outputs the sound source or noise so that the calculated signal- After adjusting the size of the sound source, the speech recognition performance is evaluated.

### SUMMARY

The present invention provides a method for testing a vehicle-mounted voice device, an apparatus for testing a vehicle-mounted voice device, an electronic device, a non-transitory computer-readable storage medium and a computer program product, as set out in the appended independent claims 1, 3 and 5 to 7. Preferred embodiments of the invention are set out in the appended dependent claims.

### BRIEF DESCRIPTION OF THE DRAWINGS

The drawings are used to better understand the solution and do not constitute a limitation to the disclosure, in which:
FIG. 1 is a flowchart of a method for testing a vehicle-mounted voice device.
FIG. 2 is a flowchart of a method for testing a vehicle-mounted voice device according to an embodiment covered by the claimed invention.
FIG. 3 is a flowchart of a method for testing a vehicle-mounted voice device according to an embodiment not covered by the claimed invention.
FIG. 4 is a flowchart of a method for testing a vehicle-mounted voice device according to an embodiment not covered by the claimed invention.
FIG. 5 is a flowchart of a process of testing a vehicle-mounted voice device according to an embodiment not covered by the claimed invention.
FIG. 6 is a block diagram of an apparatus for testing a vehicle-mounted voice device according to an embodiment covered by the claimed invention.
FIG. 7 is a block diagram of an electronic device used to implement the method for testing a vehicle-mounted voice device according to an embodiment covered by the claimed invention.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein. For clarity and conciseness, descriptions of well-known functions and structures are omitted in the following description.

A method for testing a vehicle-mounted voice device, an apparatus for testing a vehicle-mounted voice device, an electronic device and a storage medium according to the embodiments of the disclosure are described below with reference to the accompanying drawings.

Artificial intelligence is a new science of technology that studies usinging computers to simulate certain thinking processes and intelligent behaviors of humans (such as learning, reasoning, thinking and planning), which has both hardware-level technologies and software-level technologies. Artificial intelligence hardware technologies generally include technologies such as sensors, dedicated artificial intelligence chips, cloud computing, distributed storage, and big data processing. Artificial intelligence software technologies include computer vision technology, speech recognition technology, natural language processing technology and deep learning, big data processing technology, knowledge graph technology and other major directions.

Natural language processing (NLP) is an important direction in the field of computer science and artificial intelligence. The content of NLP research includes but is not limited to the following branches: text classification, information extraction, automatic summarization, intelligent question and answering, topic recommendation, machine translation, subject word recognition, knowledge base construction, deep text representation, named entity recognition, text generation, text analysis (morphology, syntax and grammar), speech recognition and synthesis.

Voice technology refers to key technologies in the computer field including automatic voice recognition technology and voice synthesis technology.

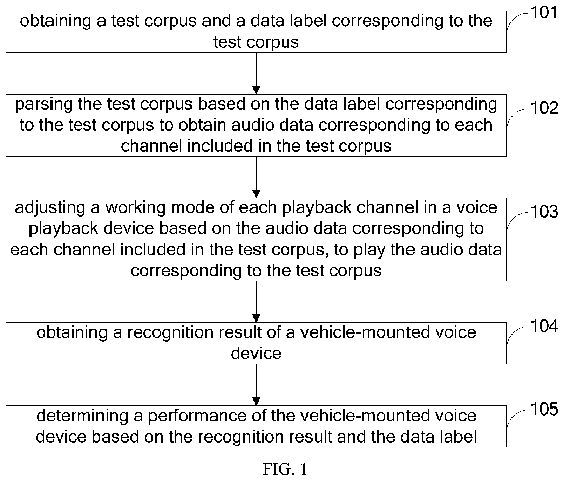

FIG. 1 is a flowchart of a method for testing a vehicle-mounted voice device according to an embodiment of the disclosure.

The method for testing a vehicle-mounted voice device according to an embodiment of the disclosure can be performed by an apparatus for testing a vehicle-mounted voice device according to an embodiment of the disclosure, by using the multi-channel characteristics, the requirements of multiple scenarios are put into different channels, so that the scenarios can be switched dynamically through the channels, improving the test efficiency.

As illustrated in FIG. 1, the method for testing a vehicle-mounted voice device includes the following steps.

In step 101, a test corpus and a data label corresponding to the test corpus are obtained.

According to the claimed invention, the data label indicates that the test corpus is a corpus for controlling a vehicle-mounted air conditioner.

In the disclosure, the test corpus corresponding to various scenarios to be tested can be recorded in advance according to of the various scenarios to be tested, and the test corpus can include audio data of multiple channels.

For example, a wake-up voice is recorded while playing music at a certain volume, to generate the test corpus. The test corpus includes wake-up voice data and music audio data. For another example, a wake-up voice is recorded while playing music at a certain volume, in combination with air conditioner noise at a certain air volume gear, and traffic noise generated at a certain speed, to generate the test corpus.

In the disclosure, a plurality of test corpus can be placed in one voice file. During testing, each test corpus and the data label corresponding to the test corpus can be obtained in turn. The voice file may be a digital voice file in a wav format or in other formats, which is not limited in the disclosure.

The data label can be used to indicate a type of the test corpus and a type of audio data contained in the test corpus. The type of the test corpus here can be wake-up corpus, corpus for controlling a vehicle-mounted device. The type of the audio data contained in the test corpus can be, for example, human voice, music sound, air conditioner sound, noise generated when vehicles are running.

For example, a number of bytes corresponding to the data label can be the same as a number of pieces of the included audio data. The data type corresponding to each byte can be specified. For example, there are 4 bytes corresponding to human voice, music sound, air conditioner sound, and the noise of the running vehicle respectively. In addition, different values of each byte can correspond to different meanings. For example, when a value of the byte corresponding to the noise of the running vehicle is 0, it means that the test corpus does not contain the noise of the running vehicle. If the value of the byte corresponding to the noise of the running vehicle is 1, it means that the noise is a noise when the speed is 20km/h. If the value of the byte corresponding to the noise of the running vehicle is 2, it means that the noise is a noise when the speed is 40km/h.

In step 102, the test corpus is parsed based on the data label corresponding to the test corpus, to obtain audio data corresponding to each channel included in the test corpus.

After the data label corresponding to the test corpus and the test corpus are obtained, the test corpus can be parsed according to the data label corresponding to the test corpus, to obtain the audio data corresponding to each channel included in the test corpus. Thus, the audio data corresponding to each individual channel can be obtained by parsing the test corpus.

For example, de-interleaving is performed on a certain test corpus, the audio data corresponding to 4 channels included in the test corpus can be obtained, and channel 0 is the audio data of the test voice, channel 1 is the audio data of music, channel 2 is the audio data of the air conditioner, and channel 3 is the noise when the vehicle drives at a certain speed.

In step 103, a working mode of each playback channel in a voice playback device is adjusted based on the audio data corresponding to each channel included in the test corpus, to play the audio data corresponding to the test corpus.

In the disclosure, the working mode of each playback channel in the voice playback device is adjusted based on the audio data corresponding to each channel included in the test corpus. For example, a working mode of the channel for playing the test voice data is adjusted according to the test voice, to play the test voice data; for a working mode of the channel for playing the audio data of a music, by adjusting the volume of the music, the voice playback device plays the audio data corresponding to the test corpus.

That is, the voice playback device can play the audio data of each channel through a corresponding playback channel, to make the test scenario more similar to the real test scenario.

When the voice playback device plays the audio data corresponding to each channel, the vehicle-mounted voice device can collect the audio data, identify the audio data, and execute corresponding control instructions according to an identification result.

In step 104, a recognition result of a vehicle-mounted voice device is obtained.

In the disclosure, a log file of the vehicle-mounted voice device is obtained from an output end of the vehicle-mounted voice device, the log file can be parsed to obtain the recognition result of the vehicle-mounted voice device in the current time period.

For example, the test voice data in the test corpus is "What's the weather like today", and the recognition result of the vehicle-mounted voice device parsed from the log file of the vehicle-mounted voice device is "whoops the weather like today".

In step 105, a performance of the vehicle-mounted voice device is determined based on the recognition result and the data label.

In the disclosure, the data label can indicate the type of the test corpus, control operation instructing execution. After the recognition result of the vehicle-mounted voice device is obtained, the performance of the vehicle-mounted voice device is determined according to a matching degree between the recognition result and the data label.

In an example not covered by the claimed invention, the data label indicates that the test corpus is the wake-up corpus, and the recognition result of the vehicle-mounted voice device is that the recognition is failed and the device is not wakened up. It can be seen that the matching degree between the recognition result and the data label is low, and the performance of the vehicle-mounted voice device under this test does not meet the requirements.

In another example not covered by the claimed invention, the data label indicates that the test corpus is to control a vehicle-mounted playback device to play music A. If the recognition result is that the vehicle-mounted playback device plays the music A, it means that the recognition result of the vehicle-mounted voice device matches the data label, the performance of the vehicle-mounted voice device under this test scenario satisfies the requirements.

In the disclosure, the vehicle-mounted voice device can be tested sequentially with multiple test corpus, until test of the last test corpus is completed, and a recognition rate of the vehicle-mounted voice device can be determined according to the test result of each time, and the performance of the vehicle-mounted voice device can be determined.

In the embodiments of the disclosure, the test corpus and the data label corresponding to the test corpus are obtained, the test corpus is parsed to obtain the audio data corresponding to each channel included in the test corpus according to the data label corresponding to the test corpus. Based on the audio data corresponding to each channel included in the test corpus, the working mode of each playback channel in the voice playback device is adjusted to play the audio data corresponding to the test corpus. The recognition result of the vehicle-mounted voice device is obtained and the performance of the vehicle-mounted voice device is determined according to the recognition result and the data label. Therefore, by using the multi-channel characteristics, the requirements of multiple scenarios are put into different channels, so that the scenarios can be switched dynamically through the channels, improving the test efficiency. In addition, there is no need for people to perform tests at different speeds, the labor cost is saved and high safety is achieved.

According to the claimed invention, the test corpus is the corpus for controlling a vehicle-mounted air conditioner, and the recognition result of the vehicle-mounted voice device may be obtained according to whether the control instruction to the vehicle-mounted device in the test corpus is executed. For example, the test voice data in the test corpus is "adjusting the air volume of the air conditioner to the second gear", if the air conditioner is actually adjusted to the second gear, it can be determined that the recognition result of the vehicle-mounted voice device is correct.

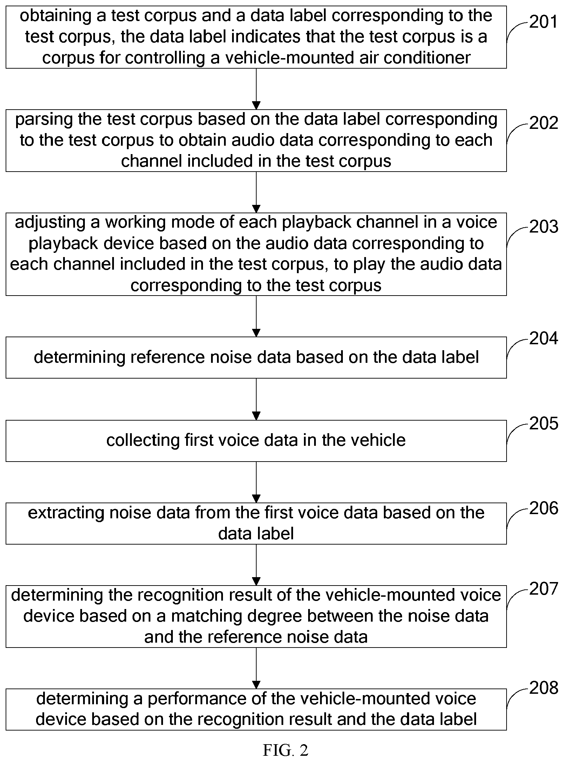

According to the claimed invention, the data label corresponding to the test corpus indicates that the test corpus is a corpus for controlling the vehicle-mounted air conditioner, and the recognition result of the vehicle-mounted voice device may be determined according to a matching degree between a noise brought by the air conditioner and a reference noise. The following description will be made with reference to FIG. 2. FIG. 2 is a flowchart of a method for testing a vehicle-mounted voice device according to an embodiment of the disclosure.

As illustrated in FIG. 2, the method for testing a vehicle-mounted voice device includes the following steps.

In step 201, a test corpus and a data label corresponding to the test corpus are obtained, and the data label indicates that the test corpus is a corpus for controlling a vehicle-mounted air conditioner.

In step 202, the test corpus is parsed based on the data label corresponding to the test corpus to obtain audio data corresponding to each channel included in the test corpus.

In step 203, a working mode of each playback channel in a voice playback device is adjusted based on the audio data corresponding to each channel included in the test corpus, to play the audio data corresponding to the test corpus.

In the disclosure, steps 201 to 203 are similar to the above-mentioned steps 101 to 103, which are not repeated here.

In step 204, reference noise data is determined based on the data label.

In the disclosure, since the data label indicates that the test corpus is the corpus for controlling the vehicle-mounted air conditioner, the reference noise data can be determined according to the data label. The reference noise data here can be understood as the noise data when the air conditioner performs the corresponding operation, and the corresponding operation refers to the operation included in the test corpus to control the vehicle-mounted air conditioner to perform.

For example, the test voice data in the test corpus is "adjusting the volume of the air conditioner to medium level", and the noise data when the volume of the air conditioner is medium level, i.e., the reference noise data, can be determined according to the data label.

In step 205, first voice data in the vehicle is collected.

In the disclosure, the vehicle-mounted voice device can collect the audio data corresponding to the test corpus played by the voice playback device, and perform recognition based on the collected audio data. For example, the test corpus includes test voice data for controlling the air conditioner and music sound, and the first voice data in the vehicle can be collected through a microphone or other radio devices. At this time, the first voice data in the vehicle includes the sound of the music and the noise of the air conditioner.

In step 206, noise data is extracted from the first voice data based on the data label.

In the disclosure, the type of the audio data included in the first voice data can be determined based on the data label, and the noise data is extracted from the first voice data according to the type of the audio data.

For example, the test corpus includes the test voice data for controlling the air conditioner and music sounds, then the first voice data can be parsed, and the noise data can be extracted from the first voice data.

In practical applications, different types of air conditioners may generate different noise frequencies. The air conditioner works in different modes may also generate different noise frequencies. Based on this, the working mode of the vehicle-mounted air conditioner can be determined according to the data label, and then according to the type and the working mode of the vehicle-mounted air conditioner, a target frequency range of the noise data to be collected is determined. Then, the noise data within the target frequency range is collected from the first voice data. Thereby, according to the type and the working mode of the air conditioner, the noise data is extracted, and the accuracy is improved.

For example, the data label indicates controlling the air conditioner to be in a sleep mode, then the target frequency range of the noise data to be collected can be determined according to the type and the sleep mode of the air conditioner. The noise data corresponding to the air conditioner is extracted from the first voice data based on the target frequency range.

In step 207, the recognition result of the vehicle-mounted voice device is determined based on a matching degree between the noise data and the reference noise data.

In the disclosure, the recognition result of the vehicle-mounted voice device can be determined according to the matching degree between the noise data and the reference noise data. For example, the test voice data in the test corpus is "adjusting the volume of the air conditioner to medium level". If the extracted noise data matches the noise data of the air conditioner when the air volume is the medium level, it means that the air volume of the air conditioner is adjusted to the medium level, that is, the test voice data in the test corpus is correctly recognized and the recognized control instructions are executed. If the matching degree between the extracted noise data and the noise data of the air-conditioning when the air volume is the medium level is less than a corresponding threshold, it can be determined that the vehicle-mounted voice device has a recognition error.

In step 208, a performance of the vehicle-mounted voice device is determined based on the recognition result and the data label.

In the disclosure, step 208 is similar to the above-mentioned step 105, which is not repeated here.

According to the claimed invention, the data label indicates that the test corpus is the corpus for controlling the vehicle-mounted air conditioner, when obtaining the recognition result of the vehicle-mounted voice device, the reference noise data is determined according to the data label, the first voice data in the vehicle is collected, the noise data is extracted from the first voice data based on the data label, the recognition result of the vehicle-mounted voice device is determined according to the matching degree between the noise data and the reference noise data, the performance of the vehicle-mounted voice device is determined according to the recognition result, which realizes automatic test and improves the test efficiency.

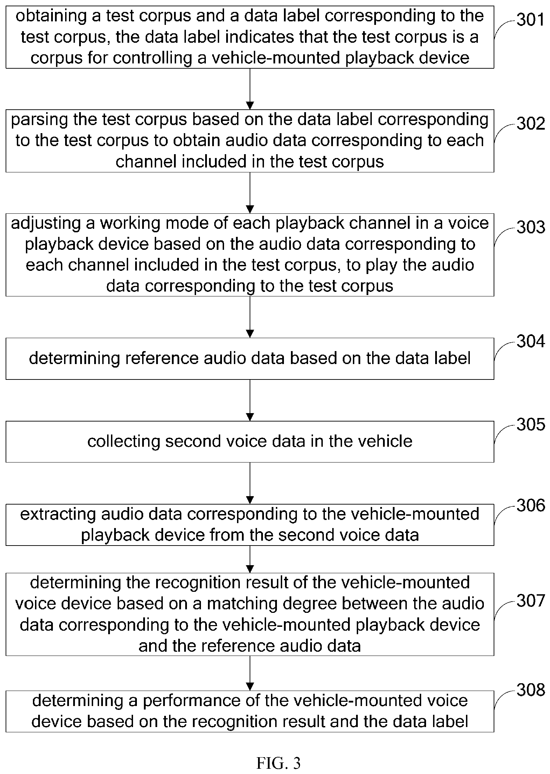

When the test corpus is the corpus for controlling the vehicle-mounted playback device, the recognition result of the vehicle-mounted voice device may be obtained according to whether the control instruction for the vehicle-mounted playback device in the test corpus is executed. For example, the test voice data in the test corpus is "playing music B", if music B is actually played, it can be determined that the recognition result of the vehicle-mounted voice device is correct. In an embodiment of the disclosure, the data label corresponding to the test corpus may indicate that the test corpus is the corpus for controlling the vehicle-mounted playback device, and the recognition result of the vehicle-mounted voice device may be determined according to the matching degree between the voice data of the music and the reference voice data. The following description will be made with reference to FIG. 3. FIG. 3 is a flowchart of a method for testing a vehicle-mounted voice device according to an embodiment not covered by the claimed invention.

As illustrated in FIG. 3, the method for testing a vehicle-mounted voice device includes the following steps.

In step 301, a test corpus and a data label corresponding to the test corpus are obtained.

In step 302, the test corpus is parsed based on the data label corresponding to the test corpus to obtain audio data corresponding to each channel included in the test corpus.

In step 303, a working mode of each playback channel in a voice playback device is adjusted based on the audio data corresponding to each channel included in the test corpus, to play the audio data corresponding to the test corpus.

In this embodiment, steps 301 to 303 are similar to the above-mentioned steps 101 to 103, which are not repeated here.

In step 304, reference audio data is determined based on the data label.

In the disclosure, the data label indicates that the test corpus is the corpus for controlling the vehicle-mounted playback device, the reference audio data can be determined according to the data label.

For example, the data label indicates that the test corpus is to control the vehicle-mounted playback device to a certain volume, then the audio data corresponding to the volume, i.e., the reference audio data, can be determined according to the data label.

For example, the data label indicates that the test corpus is to control the vehicle-mounted playback device to play a certain music, so the audio data corresponding to the music, i.e., the reference audio data, can be determined according to the data label.

In practical application, there is a situation where voice commands are input frequently. For example, voice data "playing music A" is input, and after a few minutes, voice data "playing crosstalk M" is input, then the two pieces of voice data can be put into different test corpuses for testing, and the tests of the two test corpuses are performed sequentially. This can make one test corpus include one control instruction, so that the reference audio data can be determined according to the data label.

In step 305, second voice data in the vehicle is collected.

In the disclosure, the vehicle-mounted voice device can collect the audio data corresponding to the test corpus played by the voice playback device, and performs recognition based on the collected audio data. For example, the test corpus includes the test voice data for controlling the playback device, music sound, and air conditioner sound, and the second voice data in the vehicle can be collected through a microphone or other radio devices. At this time, the second voice data in the vehicle may include music sound and air conditioner noise.

In step 306, audio data corresponding to the vehicle-mounted playback device is extracted from the second voice data.

The data label indicates that the test corpus is the corpus for controlling the playback device, it also indicates the type of the audio data included in the test corpus, thus the type of the audio data that may be included in the second voice data can be determined according to the data label. Based on this, the audio data corresponding to the vehicle-mounted playback device can be extracted from the second voice data.

In step 307, the recognition result of the vehicle-mounted voice device is determined based on a matching degree between the audio data corresponding to the vehicle-mounted playback device and the reference audio data.

In the disclosure, the identification result of the vehicle-mounted voice device can be determined according to the matching degree between the audio data corresponding to the vehicle-mounted playback device and the reference audio data. For example, the test voice data in the test corpus is "playing music A", if the audio data corresponding to the vehicle-mounted playback device matches the audio data of music A, it means that the vehicle-mounted playback device is playing music A, that is, the test voice data in the test corpus is correctly recognized and the recognized control instructions are executed. If the matching degree between the audio data corresponding to the vehicle-mounted playback device and the audio data of music A is less than a corresponding preset threshold, it can be determined that the vehicle-mounted voice device has a recognition error.

In step 308, a performance of the vehicle-mounted voice device is determined based on the recognition result and the data label.

In the disclosure, step 308 is similar to the above-mentioned step 105, which is not repeated here.

In an embodiment not covered by the claimed invention, if the data label indicates that the test corpus is the corpus for controlling the vehicle-mounted playback device, when obtaining the recognition result of the vehicle-mounted voice device, the reference audio data may be determined according to the data label, the second voice data in the vehicle is collected, the audio data corresponding to the vehicle-mounted playback device is extracted from the second voice data, the recognition result of the vehicle-mounted voice device is determined according to the matching degree between the audio data corresponding to the vehicle-mounted playback device and the reference audio data, and the performance of the vehicle-mounted voice device can be determined according to the recognition result and the data label after the recognition result is obtained. Therefore, when the test corpus is the corpus for controlling the vehicle-mounted playback device, the recognition result of the vehicle-mounted voice device can be determined according to the matching degree between the extracted audio data corresponding to the vehicle-mounted playback device and the reference audio data, thereby realizing automatic testing and improving the test efficiency.

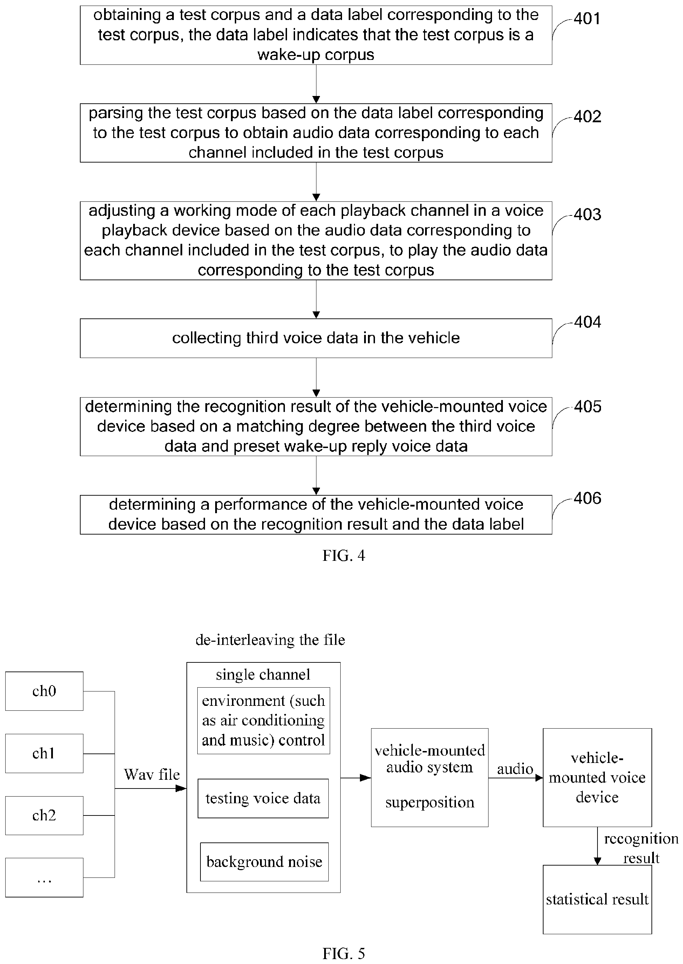

In practical application, the test corpus can be a wake-up corpus. In an embodiment not covered by the claimed invention, if the data label indicates that the test corpus is the wake-up corpus, the recognition result of the vehicle-mounted voice device may be determined based on a matching degree between the collected audio data and a wake-up reply voice data. The following description will be made with reference to FIG. 4. FIG. 4 is a flowchart of a method for testing a vehicle-mounted voice device according to an embodiment not covered by the claimed invention.

As illustrated in FIG. 4, the method for testing a vehicle-mounted voice device includes the following steps.

In step 401, a test corpus and a data label corresponding to the test corpus are obtained.

In step 402, the test corpus is parsed based on the data label corresponding to the test corpus to obtain audio data corresponding to each channel included in the test corpus.

In step 403, a working mode of each playback channel in a voice playback device is adjusted based on the audio data corresponding to each channel included in the test corpus, to play the audio data corresponding to the test corpus.

In this embodiment, steps 401 to 403 are similar to the above-mentioned steps 101 to 103, which are not repeated here.

In step 404, third voice data in the vehicle is collected.

In the disclosure, the vehicle-mounted voice device can collect the audio data corresponding to the test corpus played by the voice playback device, and perform recognition on the collected audio data. For example, the test corpus includes the test voice data for waking up the vehicle-mounted voice device, music sound, and air conditioner sound. The third voice data in the vehicle can be collected through a sound collection device such as a microphone. At this time, the third voice data in the vehicle may include voice output by the vehicle voice device, music sound, and the noise of the air conditioner.

In step 405, the recognition result of the vehicle-mounted voice device is determined based on a matching degree between the third voice data and preset wake-up reply voice data.

In the disclosure, the recognition result of the vehicle-mounted voice device can be determined according to the matching degree between the third voice data and the preset wake-up reply voice data. For example, the test voice data in the test corpus is "Xiaodu, Xiaodu", if the third voice data includes the preset wake-up reply voice data "Yes", it is determined that the vehicle-mounted voice device has been awakened, that is, the vehicle-mounted voice device performs recognition correctly.

In step 406, a performance of the vehicle-mounted voice device is determined based on the recognition result and the data label.

In the disclosure, step 406 is similar to the above-mentioned step 105, which is not repeated here.

In an embodiment not covered by the claimed invention, if the test corpus is the wake-up corpus, when obtaining the recognition result of the vehicle-mounted voice device, the third voice data in the vehicle can be collected, the recognition result of the vehicle-mounted voice device is determined according to the matching degree between the third voice data and the preset wake-up reply voice data, after the recognition result is obtained, the performance of the vehicle-mounted voice device can be determined according to the recognition result and the data label. Thus, when the test corpus is the wake-up corpus, the recognition result of the vehicle-mounted voice device is determined according to the matching degree between the third voice data in the collected vehicle and the preset wake-up reply voice data, automatic testing is realized and the test efficiency is improved.

During testing, if the test corpus includes human voice, music sound, air-conditioning sound, noise of running vehicles, the vehicle playback device can be controlled according to the volume of the music in the test corpus, the vehicle-mounted air conditioner can be controlled according to the gear corresponding to the air-conditioning sound. The audio data in the vehicle is collected. The collected audio data, the test voice data in the test corpus, and the noise of the running vehicle are superimposed, and the mixed audio data is input to the vehicle-mounted voice device, so that the vehicle-mounted voice device can perform recognition on the mixed audio data. The following description will be made with reference to FIG. 5. FIG. 5 is a flowchart of a process of testing a vehicle-mounted voice device according to an embodiment not covered by the claimed invention.

As shown in FIG. 5, a file in a wav format corresponding to the test corpus can include multiple channels: ch0, ch1 and ch2, and the file in the wav format is de-interleaved and disassembled into single channels, such as a single channel corresponding to the environment (such as music, and air conditioner) control, and a single channel corresponding to the background noise, etc. A header of the file in the wav format includes information of a number of the channels. The background noise refers to the noise when the vehicle is running.

The vehicle-mounted playback device is controlled based on the parsed audio data of the music such as sound volume. After the air conditioner is controlled based on the parsed audio data corresponding to the air conditioner, the collected in-vehicle audio data, the test voice data and the background noise are input to the vehicle-mounted audio system for superposition, and the mixed audio is input to the vehicle-mounted voice device for recognition, and then the test result is obtained.

It should be noted that music and air conditioning correspond to different channels.

In the actual test, the test voice data and the background noise can be directly input into the vehicle-mounted audio system for superimposition, or the test voice data and the background noise can be played through two non-vehicle-mounted playback devices respectively. For example, the test voice data can be played using an artificial mouth.

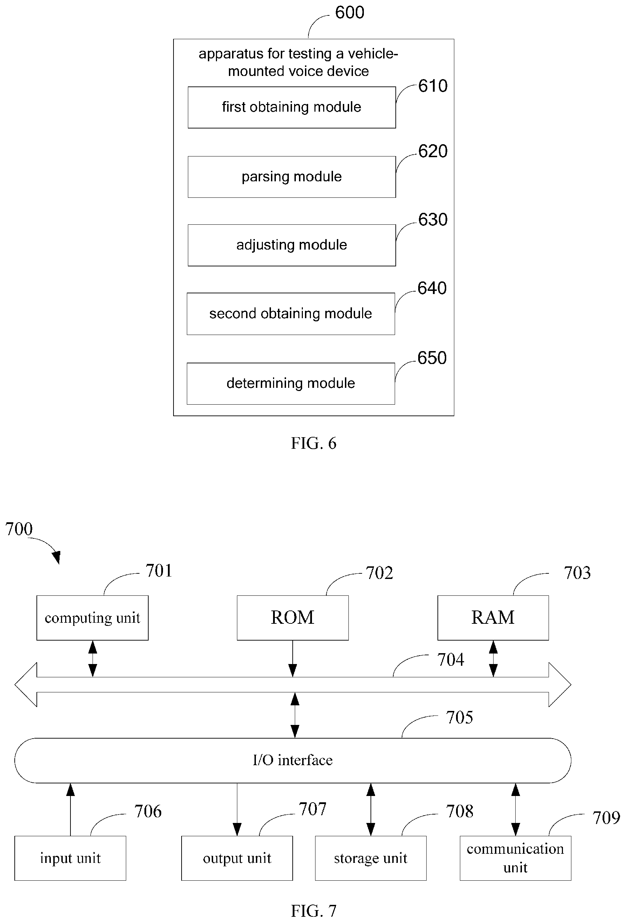

In order to realize the above-mentioned embodiments, the embodiments of the disclosure also provide an apparatus for testing a vehicle-mounted voice device. FIG. 6 is a schematic diagram of an apparatus for testing a vehicle-mounted voice device according to an embodiment covered by the claimed invention.

As shown in FIG. 6, an apparatus 600 for testing a vehicle-mounted voice device includes: a first obtaining module 610, a parsing module 620, an adjusting module 630, a second obtaining module 640 and a determining module 650.

The first obtaining module 610 is configured to obtain a test corpus and a data label corresponding to the test corpus.

The parsing module 620 is configured to parse the test corpus based on the data label corresponding to the test corpus to obtain audio data corresponding to each channel included in the test corpus.

The adjusting module 630 is configured to adjust a working mode of each playback channel in a voice playback device based on the audio data corresponding to each channel included in the test corpus, to play the audio data corresponding to the test corpus.

The second obtaining module 640 is configured to obtain a recognition result of a vehicle-mounted voice device.

The determining module 650 is configured to determine a performance of the vehicle-mounted voice device based on the recognition result and the data label.

According to the claimed invention, the data label indicates that the test corpus is a corpus for controlling a vehicle-mounted air conditioner, and the second obtaining module 640 includes: a first determining unit, a collecting unit, an extracting unit and a second determining unit.

The first determining unit is configured to determine reference noise data based on the data label.

The collecting unit is configured to collect first voice data in the vehicle.

The extracting unit is configured to extract noise data from the first voice data based on the data label.

The second determining unit is configured to determine the recognition result of the vehicle-mounted voice device based on a matching degree between the noise data and the reference noise data.

In a possible implementation of the embodiments of the disclosure, the extracting unit is configured to:
determine a working mode of the vehicle-mounted air conditioner based on the data label;
determine a target frequency range of noise data to be collected based on a type and the working mode of the vehicle-mounted air conditioner; and
collect the noise data within the target frequency range from the first voice data.

In a possible implementation of embodiments not covered by the claimed invention, the data label indicates that the test corpus is a corpus for controlling a vehicle-mounted playback device, and the second obtaining module 640 is configured to:
determine reference audio data based on the data label;
collect second voice data in the vehicle;
extract audio data corresponding to the vehicle-mounted playback device from the second voice data; and
determine the recognition result of the vehicle-mounted voice device based on a matching degree between the audio data corresponding to the vehicle-mounted playback device and the reference audio data.

In a possible implementation of embodiments not covered by the claimed invention, the data label indicates that the test corpus is a wake-up corpus, and the second obtaining module 640 is configured to:
collect third voice data in the vehicle; and
determine the recognition result of the vehicle-mounted voice device based on a matching degree between the third voice data and preset wake-up reply voice data.

It should be noted that the explanation of the above-mentioned embodiments of the method for testing the vehicle-mounted voice device is applicable to the apparatus for testing the vehicle-mounted voice device of the embodiments, which will not be repeated here.

In the embodiments covered by the claimed invention, the test corpus and the data label corresponding to the test corpus are obtained, the test corpus is parsed to obtain the audio data corresponding to each channel included in the test corpus according to the data label corresponding to the test corpus. Based on the audio data corresponding to each channel included in the test corpus, the working mode of each playback channel in the voice playback device is adjusted to play the audio data corresponding to the test corpus. The recognition result of the vehicle-mounted voice device is obtained and the performance of the vehicle-mounted voice device is determined according to the recognition result and the data label. Therefore, by using the multi-channel characteristics, the requirements of multiple scenarios are put into different channels, so that the scenarios can be switched dynamically through the channels, improving the test efficiency. In addition, there is no need for people to perform tests at different speeds, the labor cost is saved and high safety is achieved.

The claimed invention also provides an electronic device, a readable storage medium and a computer program product. FIG. 7 is a block diagram of an electronic device 700 used to implement the method according to embodiments covered by the claimed invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 7, the device 700 includes a computing unit 701 performing various appropriate actions and processes based on computer programs stored in a read-only memory (ROM) 702 or computer programs loaded from the storage unit 708 to a random access memory (RAM) 703. In the RAM 703, various programs and data required for the operation of the device 700 are stored. The computing unit 701, the ROM 702, and the RAM 703 are connected to each other through a bus 704. An input/output (I/O) interface 705 is also connected to the bus 704.

Components in the device 700 are connected to the I/O interface 705, including: an inputting unit 706, such as a keyboard, a mouse; an outputting unit 707, such as various types of displays, speakers; a storage unit 708, such as a disk, an optical disk; and a communication unit 709, such as network cards, modems, and wireless communication transceivers. The communication unit 709 allows the device 700 to exchange information/data with other devices through a computer network such as the Internet and/or various telecommunication networks.

The computing unit 701 may be various general-purpose and/or dedicated processing components with processing and computing capabilities. Some examples of computing unit 701 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 701 executes the various methods and processes described above, such as the method for testing a vehicle-mounted voice device. For example, in some embodiments, the method may be implemented as a computer software program, which is tangibly contained in a machine-readable medium, such as the storage unit 708. In some embodiments, part or all of the computer program may be loaded and/or installed on the device 700 via the ROM 702 and/or the communication unit 709. When the computer program is loaded on the RAM 703 and executed by the computing unit 701, one or more steps of the method described above may be executed. Alternatively, in other embodiments, the computing unit 701 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve the problem that there are the defects of difficult management and weak business expansion in the traditional physical hosts and (Virtual Private Server) VPS services. The server may be a server of a distributed system, or a server combined with a block-chain.

The claimed invention also provides a computer program product as defined by appended independent claim 7.

## Claims

1. A method for testing a vehicle-mounted voice device, comprising:
obtaining a test corpus and a data label corresponding to the test corpus (101);
parsing the test corpus based on the data label corresponding to the test corpus to obtain audio data corresponding to each channel included in the test corpus (102);
adjusting a working mode of each playback channel in a voice playback device based on the audio data corresponding to each channel included in the test corpus, to play the audio data corresponding to the test corpus (103);
obtaining a recognition result of a vehicle-mounted voice device (104); and
determining a performance of the vehicle-mounted voice device based on the recognition result and the data label (105);
wherein the data label indicates that the test corpus is a corpus for controlling a vehicle-mounted air conditioner, and obtaining the recognition result of the vehicle-mounted voice device (104) comprises:
determining reference noise data based on the data label (204);
collecting first voice data in the vehicle (205);
extracting noise data from the first voice data based on the data label (206); and
determining the recognition result of the vehicle-mounted voice device based on a matching degree between the noise data and the reference noise data (207).

2. The method of claim 1, wherein extracting (206) the noise data from the first voice data based on the data label comprises:
determining a working mode of the vehicle-mounted air conditioner based on the data label;
determining a target frequency range of noise data to be collected based on a type and the working mode of the vehicle-mounted air conditioner; and
collecting the noise data within the target frequency range from the first voice data.

3. An apparatus (600) for testing a vehicle-mounted voice device, comprising:
a first obtaining module (610), configured to obtain a test corpus and a data label corresponding to the test corpus;
a parsing module (620), configured to parse the test corpus based on the data label corresponding to the test corpus to obtain audio data corresponding to each channel included in the test corpus;
an adjusting module (630), configured to adjust a working mode of each playback channel in a voice playback device based on the audio data corresponding to each channel included in the test corpus, to play the audio data corresponding to the test corpus;
a second obtaining module (640), configured to obtain a recognition result of a vehicle-mounted voice device; and
a determining module (650), configured to determine a performance of the vehicle-mounted voice device based on the recognition result and the data label;
wherein the data label indicates that the test corpus is a corpus for controlling a vehicle-mounted air conditioner, and the second obtaining module (640) comprises:
a first determining unit, configured to determine reference noise data based on the data label;
a collecting unit, configured to collect first voice data in the vehicle;
an extracting unit, configured to extract noise data from the first voice data based on the data label; and
a second determining unit, configured to determine the recognition result of the vehicle-mounted voice device based on a matching degree between the noise data and the reference noise data.

4. The apparatus of claim 3, wherein the extracting unit is configured to:
determine a working mode of the vehicle-mounted air conditioner based on the data label;
determine a target frequency range of noise data to be collected based on a type and the working mode of the vehicle-mounted air conditioner; and
collect the noise data within the target frequency range from the first voice data.

5. An electronic device, comprising:
at least one processor; and
a memory communicatively coupled to the at least one processor; wherein,
the memory stores instructions executable by the at least one processor, and when the instructions are executed by the at least one processor, the at least one processor is caused to execute the method according to any one of claims 1 or 2.

6. A non-transitory computer-readable storage medium storing computer instructions which, when executed by a computer, cause the computer to carry out the steps of the method according to any one of claims 1 or 2.

7. A computer program product comprising instructions which, when the computer program is executed by a computer, cause the computer to carry out the steps of the method according to any of claims 1 or 2.

## Patentansprüche

1. Verfahren zur Prüfung einer in einem Fahrzeug montierten Spracheinrichtung, umfassend:
Erhalten eines Prüfkörpers und eines Datenetiketts, das dem Prüfkörper (101) entspricht;
Parsen des Prüfkörpers basierend auf dem Datenetikett, das dem Prüfkörper entspricht, um Audiodaten zu erhalten, die jedem Kanal entsprechen, der in dem Prüfkörper (102) enthalten ist;
Einstellen eines Arbeitsmodus jedes Wiedergabekanals in einer Sprachwiedergabeeinrichtung basierend auf den Audiodaten, die jedem Kanal entsprechen, der in dem Prüfkörper enthalten ist, um die Audiodaten entsprechend dem Prüfkörper (103) wiederzugeben;
Erhalten eines Erkennungsergebnisses einer in einem Fahrzeug montierten Spracheinrichtung (104); und
Bestimmen einer Leistung der in dem Fahrzeug montierten Spracheinrichtung basierend auf dem Erkennungsergebnis und dem Datenetikett (105);
wobei das Datenetikett angibt, dass der Prüfkörper ein Körper zum Steuern einer in dem Fahrzeug montierten Klimaanlage ist, und das Erhalten des Erkennungsergebnisses der in dem Fahrzeug montierten Spracheinrichtung (104) Folgendes umfasst:
Bestimmen von Referenzgeräuschdaten basierend auf dem Datenetikett (204);
Sammeln erster Sprachdaten in dem Fahrzeug (205);
Extrahieren von Geräuschdaten aus den ersten Sprachdaten basierend auf dem Datenetikett (206);
und
Bestimmen des Erkennungsergebnisses der in dem Fahrzeug montierten Spracheinrichtung basierend auf einem Übereinstimmungsgrad zwischen den Geräuschdaten und den Referenzgeräuschdaten (207).

2. Verfahren nach Anspruch 1, wobei das Extrahieren (206) der Geräuschdaten aus den ersten Sprachdaten basierend auf dem Datenetikett Folgendes umfasst:
Bestimmen eines Arbeitsmodus der in dem Fahrzeug montierten Klimaanlage basierend auf dem Datenetikett;
Bestimmen eines Zielfrequenzbereichs von zu sammelnden Geräuschdaten basierend auf einem Typ und dem Arbeitsmodus der in dem Fahrzeug montierten Klimaanlage; und
Sammeln der Geräuschdaten innerhalb des Zielfrequenzbereichs anhand der ersten Sprachdaten.

3. Vorrichtung (600) zur Prüfung einer in einem Fahrzeug montierten Spracheinrichtung, umfassend:
ein erstes Erhaltungsmodul (610), das konfiguriert ist, um einen Prüfkörper und ein Datenetikett, das dem Prüfkörper entspricht, zu erhalten:
ein Parsing-Modul (620), das konfiguriert ist, um den Prüfkörper basierend auf dem Datenetikett entsprechend dem Prüfkörper zu parsen, um Audiodaten entsprechend jedem Kanal, der in dem Prüfkörper enthalten ist, zu erhalten;
ein Einstellungsmodul (630), das konfiguriert ist, um einen Arbeitsmodus jedes Wiedergabekanals in einer Sprachwiedergabeeinrichtung basierend auf den Audiodaten entsprechend jedem Kanal, der in dem Prüfkörper enthalten ist, einzustellen, um die Audiodaten entsprechend dem Prüfkörper wiederzugeben;
ein zweites Erhaltungsmodul (640), das konfiguriert ist, um ein Erkennungsergebnis einer im dem Fahrzeug montierten Spracheinrichtung zu erhalten; und
ein Bestimmungsmodul (650), das konfiguriert ist, um eine Leistung der im dem Fahrzeug montierten Spracheinrichtung basierend auf dem Erkennungsergebnis und dem Datenetikett zu bestimmen;
wobei das Datenetikett angibt, dass der Prüfkörper ein Körper zur Steuerung einer in dem Fahrzeug montierten Klimaanlage ist, und das zweite Erhaltungsmodul (640) Folgendes umfasst:
eine erste Bestimmungseinheit, die konfiguriert ist, um Referenzgeräuschdaten basierend auf dem Datenetikett zu bestimmen;
eine Sammeleinheit, die konfiguriert ist, um erste Sprachdaten in dem Fahrzeug zu sammeln;
eine Extrahiereinheit, die konfiguriert ist, um Geräuschdaten aus den ersten Sprachdaten basierend auf dem Datenetikett zu extrahieren; und
eine zweite Bestimmungseinheit, die konfiguriert ist, um das Erkennungsergebnis der in dem Fahrzeug montierten Spracheinrichtung basierend auf einem Übereinstimmungsgrad zwischen den Geräuschdaten und den Referenzgeräuschdaten zu bestimmen.

4. Vorrichtung nach Anspruch 3, wobei die Extrahiereinheit konfiguriert ist, um:
einen Arbeitsmodus der im dem Fahrzeug montierten Klimaanlage basierend auf dem Datenetikett zu bestimmen;
einen Zielfrequenzbereich von zu sammelnden Geräuschdaten basierend auf einem Typ und dem Arbeitsmodus der im dem Fahrzeug montierten Klimaanlage zu bestimmen; und
die Geräuschdaten innerhalb des Zielfrequenzbereichs anhand der ersten Sprachdaten zu sammeln.

5. Elektronisches Gerät, umfassend:
mindestens einen Prozessor; und
einen Speicher, der kommunikativ mit dem mindestens einen Prozessor gekoppelt ist; wobei
der Speicher Anweisungen speichert, die von dem mindestens einen Prozessor ausgeführt werden können, und wenn die Anweisungen von dem mindestens einen Prozessor ausgeführt werden, der mindestens eine Prozessor veranlasst wird, das Verfahren nach einem der Ansprüche 1 oder 2 auszuführen.

6. Nicht-flüchtiges computerlesbares Speichermedium, das Computeranweisungen speichert, welche, wenn sie von einem Computer ausgeführt werden, den Computer veranlassen, die Schritte des Verfahrens nach einem der Ansprüche 1 oder 2 auszuführen.

7. Computerprogrammprodukt umfassend Anweisungen, welche, wenn das Computerprogramm von einem Computer ausgeführt wird, den Computer veranlassen, die Schritte des Verfahrens nach einem der Ansprüche 1 oder 2 auszuführen.

## Revendications

1. Procédé pour tester un dispositif vocal monté sur véhicule, comprenant :
obtenir un corpus de test et une étiquette de données correspondant au corpus de test (101) ;
faire l'analyse syntaxique du corpus de test sur la base de l'étiquette de données correspondant au corpus de test pour obtenir des données audio correspondant à chaque canal inclus dans le corpus de test (102) ;
ajuster un mode de travail de chaque canal de lecture dans un dispositif de lecture vocale sur la base des données audio correspondant à chaque canal inclus dans le corpus de test, pour lire les données audio correspondant au corpus de test (103) ;
obtenir un résultat de reconnaissance d'un dispositif vocal monté sur véhicule (104) ; et
déterminer une performance du dispositif vocal monté sur véhicule sur la base du résultat de reconnaissance et de l'étiquette de données (105) ;
dans lequel l'étiquette de données indique que le corpus de test est un corpus pour commander un climatiseur monté sur véhicule, et obtenir le résultat de reconnaissance du dispositif vocal monté sur véhicule (104) comprend :
déterminer des données de bruit de référence sur la base de l'étiquette de données (204) ;
collecter des premières données vocales dans le véhicule (205) ;
extraire des données de bruit des premières données vocales sur la base de l'étiquette de données (206) ; et
déterminer le résultat de reconnaissance du dispositif vocal monté sur véhicule sur la base d'un degré de concordance entre les données de bruit et les données de bruit de référence (207).

2. Procédé de la revendication 1, dans lequel extraire (206) les données de bruit des premières données vocale sur la base de l'étiquette de données comprend :
déterminer un mode de travail du climatiseur monté sur véhicule sur la base de l'étiquette de données ;
déterminer une plage de fréquence cible de données de bruit à collecter sur la base d'un type et du mode de travail du climatiseur monté sur véhicule ; et
collecter les données de bruit à l'intérieur de la plage de fréquence cible à partir des premières données vocales.

3. Appareil (600) pour tester un dispositif vocal monté sur véhicule, comprenant :
un premier module d'obtention (610), configuré pour obtenir un corpus de test et une étiquette de données correspondant au corpus de test ;
un module d'analyse syntaxique (620), configuré pour faire l'analyse syntaxique du corpus de test sur la base de l'étiquette de données correspondant au corpus de test pour obtenir des données audio correspondant à chaque canal inclus dans le corpus de test ;
un module d'ajustement (630), configuré pour ajuster un mode de travail de chaque canal de lecture dans un dispositif de lecture vocale sur la base des données audio correspondant à chaque canal inclus dans le corpus de test, pour lire les données audio correspondant au corpus de test ;
un deuxième module d'obtention (640), configuré pour obtenir un résultat de reconnaissance d'un dispositif vocal monté sur véhicule ; et
un module de détermination (650), configuré pour déterminer une performance du dispositif vocal monté sur véhicule sur la base du résultat de reconnaissance et de l'étiquette de données ;
dans lequel l'étiquette de données indique que le corpus de test est un corpus pour commander un climatiseur monté sur véhicule, et le deuxième module d'obtention (640) comprend :
une première unité de détermination, configurée pour déterminer des données de bruit de référence sur la base de l'étiquette de données ;
une unité de collecte, configurée pour collecter des premières données vocales dans le véhicule ;
une unité d'extraction, configurée pour extraire des données de bruit des premières données vocales sur la base de l'étiquette de données ; et
une deuxième unité de détermination, configurée pour déterminer le résultat de reconnaissance du dispositif vocal monté sur véhicule sur la base d'un degré de concordance entre les données de bruit et les données de bruit de référence.

4. Appareil de la revendication 3,
dans lequel l'unité d'extraction est configurée pour :
déterminer un mode de travail du climatiseur monté sur véhicule sur la base de l'étiquette de données ;
déterminer une plage de fréquence cible de données de bruit à collecter sur la base d'un type et du mode de travail du climatiseur monté sur véhicule ; et
collecter les données de bruit à l'intérieur de la plage de fréquence cible à partir des premières données vocales.

5. Dispositif électronique, comprenant :
au moins un processeur ; et
une mémoire en liaison de communication avec le au moins un processeur ; dans lequel,
la mémoire stocke des instructions exécutables par le au moins un processeur, et quand les instructions sont exécutées par le au moins un processeur, le au moins un processeur est amené à exécuter le procédé de l'une quelconque des revendications 1 ou 2.

6. Support de stockage non transitoire lisible sur ordinateur stockant des instructions informatiques qui, quand elles sont exécutées par un ordinateur, font effectuer à l'ordinateur les étapes du procédé selon l'une quelconque des revendications 1 ou 2.

7. Produit de programme informatique comprenant des instructions qui, quand le programme informatique est exécuté par un ordinateur, font effectuer à l'ordinateur les étapes du procédé selon l'une quelconque des revendications 1 ou 2.
